(19) **Europäisches Patentamt**

**European Patent Office**

**Office européen des brevets**

(11) Veröffentlichungsnummer: **0 301 417 B1**

(12) # EUROPÄISCHE PATENTSCHRIFT

(45) Veröffentlichungstag der Patentschrift: **09.09.92**

(51) Int. Cl.⁵: **G11B 33/04**, G11B 23/02

(21) Anmeldenummer: **88111795.6**

(22) Anmeldetag: **22.07.88**

(54) **Zu einem mehrteiligen Aufnahmebehälter zusammensetzbarer Einzelbehälter.**

(30) Priorität: **28.07.87 DE 3724961**

(43) Veröffentlichungstag der Anmeldung:
**01.02.89 Patentblatt 89/05**

(45) Bekanntmachung des Hinweises auf die
Patenterteilung:
**09.09.92 Patentblatt 92/37**

(84) Benannte Vertragsstaaten:
**AT BE CH DE ES FR GB GR IT LI LU NL SE**

(56) Entgegenhaltungen:
**EP-A- 0 134 281**
**EP-A- 0 231 868**
**DE-U- 8 602 838**
**GB-A- 794 216**
**US-A- 4 706 396**

(73) Patentinhaber: **Kurz Kunststoffe GmbH**
**Hauptstrasse 8**
**W-7452 Haigerloch - 3(DE)**

(72) Erfinder: **Seifert, Josef**
**Nikolausweg 30**
**W-7451 Grosselfingen(DE)**

(74) Vertreter: **Otte, Peter, Dipl.-Ing.**
**Tiroler Strasse 15**
**W-7250 Leonberg(DE)**

Rank Xerox (UK) Business Services

## Beschreibung

Stand der Technik

Die Erfindung geht aus von einem zu einem mehrteiligen Aufnahmebehälter, insbesondere einer Vielfach-Archivierungsbox zusammensetzbaren Einzelbehälter zur Aufnahme von plattenförmigen Gegenständen u. dgl. nach der Gattung des Anspruchs 1.

Mehrteilige Aufnahmebehälter für flache, beispielsweise plattenförmige Gegenstände sind bekannt; beispielsweise werden Schallplatten, wenn es sich um mehrere Teile einer Gesamtaufnahme handelt, in Kassetten geliefert, die dann einzeln in Papiertaschen separat verpackt in einem gemeinsamen mehrteiligen Aufnahmebehälter angeordnet sind. Es ist auch bekannt, einen mehrteiligen, flache Behältnisse oder Aufnahmetaschen aufweisenden Behälter an seinem einen unteren Ende, sämtliche Taschen hierbei umfassend, zu verbinden, während er an seinem anderen Ende rosettenförmig geöffnet oder aufgeklappt werden kann, etwa wie man zusammengefaltete Lampions öffnet, wobei dann kreisbogenförmig die sich nach unten und innen verjüngenden Behältertaschen jeweils geöffnet werden und zugänglich sind. Ein solcher Behälter hat aber den Nachteil, daß im wesentlichen nur sehr dünne Gegenstände, beispielsweise Papierbögen eingeordnet werden können, während beispielsweise die Aufnahme von Schachteln ausgeschlossen ist, da diese über ihre Höhe die gleichen Dickenabmessungen aufweisen und daher ein solcher rosettenförmiger Behälter nicht mehr geschlossen werden könnte.

Es ist auch bekannt, bestimmte plattenförmige Gegenstände, beispielsweise sogenannte Disketten für Rechner oder Computer in Stapeln anzuordnen und so zu archivieren; wird jedoch zum Gebrauch eine bestimmte Diskette benötigt, dann muß bei den bisherigen Lagermöglichkeiten der ganze Stapel der verfügbaren Disketten oder sonstigen Speichermittel, die beispielsweise auch sogenannte CD-ROM-Boxen sein können, von Hand durchgesehen werden, denn nur durch Öffnen der Behälter oder jedenfalls Entfernen über diesem angeordneter weiterer Behälter ist es möglich, die Aufschriften zu lesen und dann eine entsprechende Speicherplatte auszuwählen.

Der Erfindung liegt die Aufgabe zugrunde, einen Einzelbehälter zur Aufnahme zunächst beliebiger plattenförmiger Gegenstände, insbesondere Disketten oder CD-Platten oder CD-ROM-Boxen, die daher auch selbst wieder eine schachtelförmige Form als geschlossene Kassette aufweisen können, zu schaffen, in welchen die einzelne Kassette oder Platte leicht eingelegt werden kann, der gleichzeitig die Verpackungs-, Versand- und Verkaufshülle für diesen plattenförmigen Gegenstand bildet und ferner in Verbindung mit weiteren Einzelbehältern dieser Art so zusammengefügt werden kann, daß sich eine integrale Vielfach-Archivierungsbox ergibt, die ihrerseits wieder besondere Eigenschaften aufweist, und zwar abgeleitet aus bestimmten Eigenschaften jedes Einzelbehälters, in der Hauptsache nämlich die Eigenschaft, daß die Archivierungsbox durch Auseinanderziehen geöffnet werden kann, wodurch sämtliche in den Einzelbehältern befindlichen Kassetten gleichzeitig zugänglich sind.

In diesem Zusammenhang ist ein mehrteiliger Aufnahmebehälter in Form einer Archivierungsbox der gleichen Anmelderin bekannt (DE-GM G 86 02 838.3), bei dem, ohne daß dieser in Einzelbehälter oder -boxen aufgeteilt werden könnte, einzelne Aufnahmetaschen gebildet sind, die über Zwischenverbindungsmittel so miteinander gelenkig verbunden sind, daß die Aufeinanderfolge der Taschen nach Art einer Parallelogrammechanik ziehharmonikaartig geöffnet werden kann. Auf diese Weise ergibt sich eine direkte Sichtkontrolle und Identifizierung sämtlicher in dem mehrteiligen Aufnahmebehälter angeordneter Gegenstände oder Einzelkassetten, wobei beim Schließen des mehrteiligen Aufnahmebehälters eine erhebliche Reduzierung des zur Aufbewahrung erforderlichen Raums möglich ist. Dieser mehrteilige Aufnahmebehälter kann dann noch in ein umschlosses Gehäuse zur staubdichten Lagerung eingebracht werden. Die einzelnen Aufnahmetaschen sind dabei jeweils gebildet von einer Wandfläche, an deren Seiten zur angrenzenden Wandfläche Zwischenverbindungsmittel gelenkig befestigt sind.

Vorteile der Erfindung

Die Erfindung löst die weiter vorn angegebene Aufgabe mit den kennzeichnenden Merkmalen des Anspruchs 1 und hat den Vorteil, daß jeweils Einzelbehälter geschaffen sind, die dadurch geöffnet werden können, daß man die schachtelartige Form jedes Einzelbehälters, dessen Dicke sich aus der Dicke des aufzunehmenden plattenförmigen Gegenstandes oder der aufzunehmenden Kassette bestimmt, am Vorderwandbereich und am Hinterwandbereich erfaßt und diese beiden Wandbereiche auseinanderzieht, wodurch der Einzelbehälter sich öffnet. Diese Öffnung erfolgt nach Art eines Parallelogramms, indem an den Behälterseitenrändern längliche Verbindungsstege verlaufen. Auf jeder Seite befinden sich mindestens zwei der Verbindungsstege, so daß zur Herstellung der Parallelogrammführung jeder Behälter über vier Verbindungsstege mindestens verfügt, die am Vorderwandteil und am Rückwandteil des Einzelbehälters so befestigt sind, daß im geschlossenen Zustand des Einzelbehälters die Anlenkpunkte der Verbindungsstege sich in unterschiedlicher Höhe befinden. Es ist daher möglich, den Vorderwandteil vom Rückwandteil zu entfernen, beispielsweise abzuziehen oder umgekehrt den Rückwandteil vom Vorderwandteil, wobei der grundsätzlich parallele Verlauf zwischen beiden Teilen aufrechterhalten bleibt und die maximale Öffnung durch die Länge der Stege bzw. durch den maximalen Öffnungswinkel der Gelenke bestimmt ist. Jeder dieser eine Umhüllung für den eingebrachten Teil bildende Einzelbehälter ist dann die Schutz- bzw. Aufnahmetasche und gleichzeitige Verpackung für den Einzelbehälter bzw. den eingebrachten Gegenstand, der vorzugsweise selbst wieder Kassettenform aufweisen kann, aber auch ohne sonstige Verpackung eingebracht sein kann, beispielsweise eine CD-Platte o. dgl. sein kann.

Vorteilhafterweise ist jeder dieser Einzelbehälter so ausgebildet, daß er den eingebrachten plattenförmigen Gegenstand oder die Kassette mehr oder weniger vollständig umschließt, wobei es sich versteht, daß Materialreduzierungen in Vorder-, Seiten- oder Rückwandbereich, beispielsweise offene Stellen, Ausschnitte o. dgl. selbstverständlich möglich sind, soweit die grundlegende Struktur jedes Einzelbehälters aufrechterhalten bleibt. Jeder solcher Einzelbehälter, der gleichzeitig die Verkaufspackung für den eingebrachten Gegenstand bildet, in welchem dieser dann auch versandt-oder transportfähig ist, kann durch seine spezielle Gestalt und durch weitere zusätzliche Befestigungsmittel mit jedem anderen Einzelbehälter verbunden werden, wobei immer ein Rückwandbereich oder eine Rückwand an die Vorderwand des nächstfolgenden Einzelbehälters bündig miteinander verbunden wird.

Auf diese Weise läßt sich ein mehrteiliger Aufnahmebehälter, der beispielsweise eine Vielfacharchivierungsbox sein kann, durch Zusammensetzen einer grundsätzlich beliebigen Anzahl von Einzelbehältern herstellen, wobei sich die vorteilhaften Eigenschaften des Einzelbehälters auf die Archivierungsbox übertragen, d.h. durch Erfassen der Archivierungsbox an den jeweiligen Außenwänden, also Rückwand des ersten Einzelbehälters und Vorderwand des letzten Einzelbehälters läßt sich die gesamte Archivierungsbox mit sämtlichen Einzelbehältern dazwischen ziehharmonikaartig auseinanderziehen, also öffnen, wobei gleichzeitig sämtliche Einzelbehälter geöffnet werden und die in diesen enthaltenden Kassetten oder Gegenstände zur optischen Sichtkontrolle, Entnahme, Wiedereinsetzen oder sonstigem Gebrauch zugänglich sind.

Weitere Verbesserungen und Ausgestaltungen der Erfindung sind Gegenstand der Unteransprüche und in diesen niedergelegt. Die Dicke jedes Einzelbehälters entspricht in vorteilhafter Weise wenig mehr als der Dicke des jeweils aufzunehmenden plattenförmigen Gegenstandes, beispielsweise Diskette oder CD-Platte bzw. dessen eigenem Behälter, der im folgenden als Kassette bezeichnet wird, so daß sich sowohl eine raumsparende Lagerung der Einzelbehälter als auch der zusammengesetzten Vielfacharchivierungsbox ergibt.

Es versteht sich, daß, um zu einer gewissen Einheitlichkeit in den Ausdrücken zu gelangen, im folgenden der aufzunehmende Gegenstand lediglich noch als CD-Platte oder als Kassette bezeichnet wird, wobei es sich aber versteht, daß diese beiden Begriffe den Anwendungsbereich der Erfindung nicht einschränken und die Einzelbehälter bzw. die aus diesen zusammengesetzte Vielfacharchivierungsbox in der Lage ist, beliebige plattenförmige, also flache Gegenstände, seien diese rund, rechteckig oder von sonstiger Form, aufzunehmen und zur Lagerung und schnellen Verfügbarkeit aufzubewahren.

Eine vorteilhafte weitere Ausgestaltung besteht darin, daß die Verbindungsmechanik zwischen Vorderwandteil und Rückwandteil eines jeweiligen Behälters gleichzeitig so ausgebildet ist, daß sich Führungs- und Rückhaltemittel für die im Behälter eingebrachte Kassette ergeben, indem nämlich mindestens von den im unteren Bereich angeordneten zweiteiligen Verbindungsstegen nach innen eine Art von Haltezungen wegstehen, die in ihrer allgemeinen Form zunächst dafür sorgen, daß bei der auseinandergezogenen Einzelbehälterform eine in diesen eingesetzte Kassette nicht einfach zwischen Vorderwandteil und Rückwandteil hindurchfällt, sondern geführt beispielsweise in Anlage zur Rückwand so weit nach unten gleitet, bis ein vorspringender unterer Rand die eingebrachte Kassette auffängt.

Gleichzeitig können diese nach innen wegstehenden Hatrezungen so ausgebildet sein, daß beim Öffnen jedes Einzelbehälters die in diesem befindliche Kassette nicht abkippt, also bei einer unwillkürlich gekippten Haltung nicht der Abhebebewegung beispielsweise des Vorderwandteils folgt, sondern gerade durch die Öffnungsmechanik in Anlage an die Rückwand gedrückt gehalten bleibt.

Schließlich besteht eine vorteilhafte Ausgestaltung vorliegender Erfindung darin, daß zwischen Rückwandund Vorderwandteil jedes Einzelbehälters Verrastungsmittel vorgesehen sind, die den Einzelbehälter geschlossen halten, wobei schließlich noch in Unterstützung hierzu die Verbindungsstege für die Parallelogrammführung eine eigene federnde Vorspannung aufweisen können, die dahin gerichtet ist, daß jeder Einzelbehälter in seinem geschlossenen Zustand gehalten bzw. aus der geöffneten Stellung wieder in seine geschlossene Position zurückschnappt. Mit Vorteil sind diese Verbindungsstege daher einstückige Fortsetzungen von Kunststoffbereichen, aus denen der jeweilige Einzelbehälter hergestellt ist, wobei die Gelenke oder Scharniere im Übergang von den Seitenteilen zu den Verbindungsstegen Filmscharniere sein können, die eine entsprechend federnde Vorspannung aufweisen.

Es ist daher auch möglich, den gesamten Einzelbehälter aus einem einstückigen Kunststoff herzustellen oder die Seitenwände oder Bereiche von diesen zusammen mit die Seitenwände miteinander verbindenden Verbindungsstegen aus einer bestimmten Kunststoffart herzustellen, die bevorzugt solche Filmscharniere ermöglicht, während Vorder- und Rückwandteil dann aus einem anderen Kunststoff bestehen und mit den Seitenteilen verbunden werden, durch Kleben, durch einfaches Aufpressen, wobei Arretierungsmittel zur Erzielung einer festen Verbindung vorgesehen sind, durch Schweißen o. dgl.

Das Verbinden der Einzelbehälter dann zu der VielfachArchivierungsbox kann durch eine Vielzahl von Schnapp-oder Rastmöglichkeiten oder durch formschlüssige Verbindung erfolgen, wobei bei einem Ausführungsbeispiel die Behälterrandteile durch übergreifende U-förmige Klammern miteinander verbunden werden; ein anderes Ausführungsbeispiel weist Schnapp- oder Arretiermittel an den zugewandten Flächen von Rückwand und Vorderwand jeweils auf, wodurch sich diese beiden Wände miteinander formschlüssig/kraftschlüssig verbinden lassen,und schließlich ist es auch möglich, die beiden jeweils aneinandergrenzenden Wandflächen jeweils einer Vorder- und Rückwand durch schwalbenschwanzähnliche Verbindungsmittel zusammenzuschieben, wobei durch eine leichte Steigung der Schwalbenschwanzfugen in der Endposition sichere Selbsthemmung vorliegt, auch ein Verkleben, etwa durch von Klebebändern abziehbare Kunststoffolien, ist denkbar.

Zeichnung

Ausführungsbeispiele der Erfindung sind in der Zeichnung dargestellt und werden in der nachfolgenden Beschreibung im einzelnen näher erläutert. Es zeigen:

Fig. 1    eine Draufsicht auf einengeschlossenenEinzelbehälter, mit in diesem in gestrichelter Darstellung angedeutetem Behälter;

Fig. 2    den Einzelbehälter der Fig. 1 in einer Seitenansicht und

Fig. 3    den gleichen Einzelbehälter der Figuren 1 und 2 in der geöffneten Position, in welcher durch die parallelogrammartige Geradführung durch die auf beiden Seiten befindlichen beiden Stege Rückwandteil und Vorderwandteil des Einzelbehälters voneinander entfernt sind;

Fig. 4    in einer Seitendarstellung zwei miteinander verbundene Einzelbehälter in der auseinandergezogenen Form der hierdurch gebildeten Archivbox, in welcher beide Einzelbehälter geöffnet sind;

Fig. 5    schematisiert in einer Ansicht von vorn zwei miteinander verbundene Einzelbehälter, wobei die Verbindungsmittel schwalbenschwanzartige Strukturen an den Behälterrandbereichen sind;

Fig. 6    in vergrößerter Darstellung eine Verriegelungslippe an einem oberen abgebogenen Seitenwandbereich eines Behälters, die in der geschlossenen Behälterposition eine Vorder- oder Rückwand des Behälters schnappartig hintergreift;

Fig. 7    in offener, perspektivischer Darstellung einen Einzelbehälter mit darin angeordneter Kassette und

Fig. 8    den gleichen Behälter in der geschlossenen Position, perspektivisch dargestellt, während

Fig. 9    in perspektivischer Darstellung drei aneinander jeweils mit ihren Vorder- bzw. Rückwänden befestigte Einzelbehälter in der auseinandergezogenen, offenen Position zeigt, wodurch eine VielfachArchivierungsbox gebildet ist;

Fig.10    zeigt in vergrößerter Darstellung in einer schematisierten Seitenansicht mit weggelassenen Teilen im Ausschnitt einen unteren Verbindungssteg mit beidseitigen Gelenken in Form von Filmscharnieren und

Fig.11    die gleiche Ansicht der Fig. 10 in der geöffneten Behälterposition, wobei Rückhalte- und Führungsmittel von den Verbindungsstegen ausgehend auf die aufgenommene Kassette einwirken, wobei schließlich

Fig.12    in der um 90° gedrehten Darstellung der Fig. 10 die nach innen, also in Richtung auf die Kassette vorspringende, am jeweiligen Verbindungssteg angeordnete Führungs- und Haltezunge zeigt.

Beschreibung der Ausführungsbeispiele

Der Grundgedanke vorliegender Erfindung besteht darin, letztendlich zur Schaffung eines mehrteiligen Aufnahmebehälters die jeweiligen Einzelbehälter für einen plattenförmigen Gegenstand so öffnungsfähig auszubilden, daß ein Rückwandteil vom jeweiligen Vorderwandteil jedes Einzelbehälters abgezogen, an diesem aber durch eine parallelogrammartige Führung gehalten ist, wobei dann jeweilige Einzelbehälter mit ihren Vorder- und Rückwänden aneinandergelegt und aneinander befestigt werden können. Hierdurch ergibt sich dann der mehrteilige Aufnahmebehälter, der auch als Vielfach-Archivierungsbox bezeichnet werden kann und der die Eigenschaften jedes Einzelbehälters insofern übernimmt, als sich dann die gesamte Archivierungsbox ziehharmonikaartig durch die jeweiligen Parallelogrammführungen der einzelnen Behälter öffnen und wieder schließen läßt. Die Einzelbehälter sind dabei gleichzeitig die Verpackung für die jeweilige plattenförmige Ware (Kassette) und können rundum geschlossen ausgebildet sein; sie sind durch die Verbindungsmittel zwischen ihnen stapelfähig auf kleinstem Raum und bilden gleichzeitig die gemeinsame, mehrteilige Vielfach-Archivierungsbox aus.

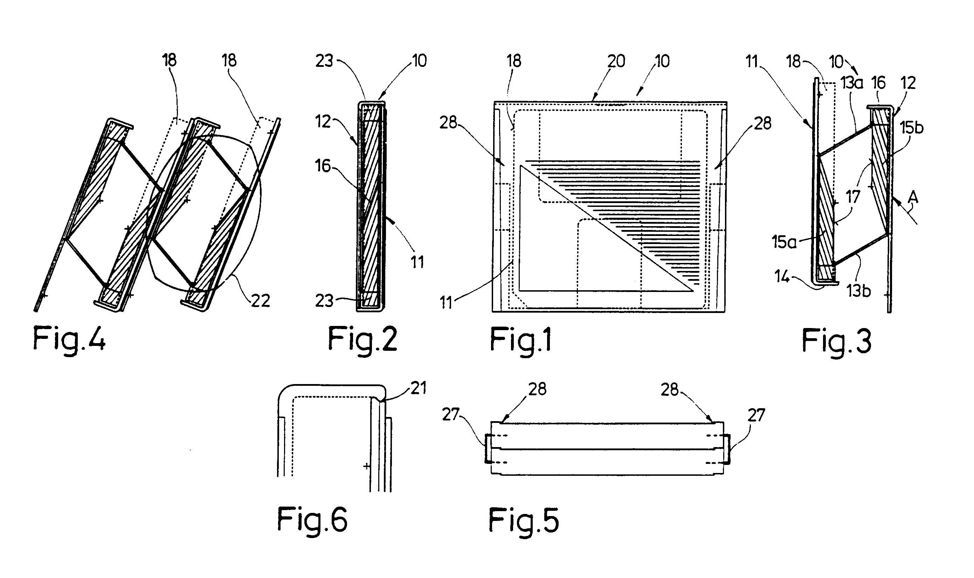

Jeder Einzelbehälter 10 (vgl. die Figuren 1, 2 und 3) besteht aus einem Rückwandteil 11 und einem Vorderwandteil 12. Die beiden Wandteile sind miteinander verbunden, und zwar über seitlich außen angeordnete Verbindungsstege 13a, 13b. Diese Verbindungsstege lassen sich an ihren Anlenkpunkten jeweils am Rückwandteil 11 und am Vorderwandteil 12 gelenkig abbiegen, sind dort also scharnierartig befestigt und sie befinden sich bei vorzugsweise gleicher Länge, was allerdings nicht unbedingt erforderlich ist, im geschlossenen Zustand des Behälters mit ihren Anlenkpunkten an unterschiedlichen Höhen, so daß sich beim Öffnen des Behälters durch diese Verbindungsstege 13a, 13b, die an beiden Seiten des jeweiligen Einzelbehälters angeordnet sind, eine Art Parallelführung für die beiden sich hierdurch voneinander entfernenden Vorderwand-und Hinterwandteile ergibt, nach Art einer für sich gesehen bekannten Parallelogrammführung.

Dabei ist der maximale Abstand, den im geöffneten Zustand der Vorderwandteil jedes Einzelbehälters zum Rückwandteil einnehmen kann, etwa so groß wie die Länge der Verbindungsstege 13a, 13b (beidseitig), wobei sowohl Vorderwandteil als auch Rückwandteil neben der jeweiligen Rückwand und Vorderwand noch andere Teile des Einzelbehälters umfassen können.

Bei dem bevorzugten, in der Zeichnung dargestellten Ausführungsbeispiel umfaßt beispielsweise die Rückwand 11 noch die untere Randkante oder untere Seitenwand 14 und mindestens Teile der beiden seitlichen Seitenwände 15a, 15a′, wobei letztere in der Darstellung der Fig. 3 nicht erkennbar ist.

Dementsprechend umfaßt dann der Vorderwandteil 12, um den vorzugsweise vollständig geschlossenen Einzelbehälter zu komplettieren, die obere Randkante oder obere Seitenwand 16 und einen anderen, in diesem Fall dann oberen Teil 15b, 15b′ der seitlichen Seitenwände. Man erkennt, daß bei einer Bewegung des Vorderwandteils 12 in Richtung des Pfeils A die Schließbewegung des Einzelbehälters 10 erfolgt,bis die in Fig. 2 gezeigte geschlossene Form erreicht ist, in welcher die beiden seitlichen Teilseitenwände 15a, 15b längs ihrer schrägen Trennlinie 16 aneinanderliegen, während die vorzugsweise dünnen, flachen Verbindungsstege 13a, 13b eingeklappt sind und an den im geöffneten Zustand der Fig. 3 freien oder unbedeckten Seitenwandflächen 17 anliegen.

Im geschlossenen Zustand übergreift auch die obere Randkante oder Seitenwand 16 den in den Behälter 10 eingegebenen plattenförmigen Gegenstand oder die Kassette 18 und deckt die Kassette im übrigen völlig ab und umschließt sie, so daß jeder Einzelbehälter 10 gleichzeitig auch die Verpackung bzw. Versand- und Transporthülle für die Kassette 18 bildet, in welcher diese Kassette auch in den Verkehr gelangt und verkauft wird.

Gleichzeitig ist dieser Einzelbehälter 10 aber auch Teil einer Vielfach-Archivierungsbox - hierauf wird weiter unten noch eingegangen.

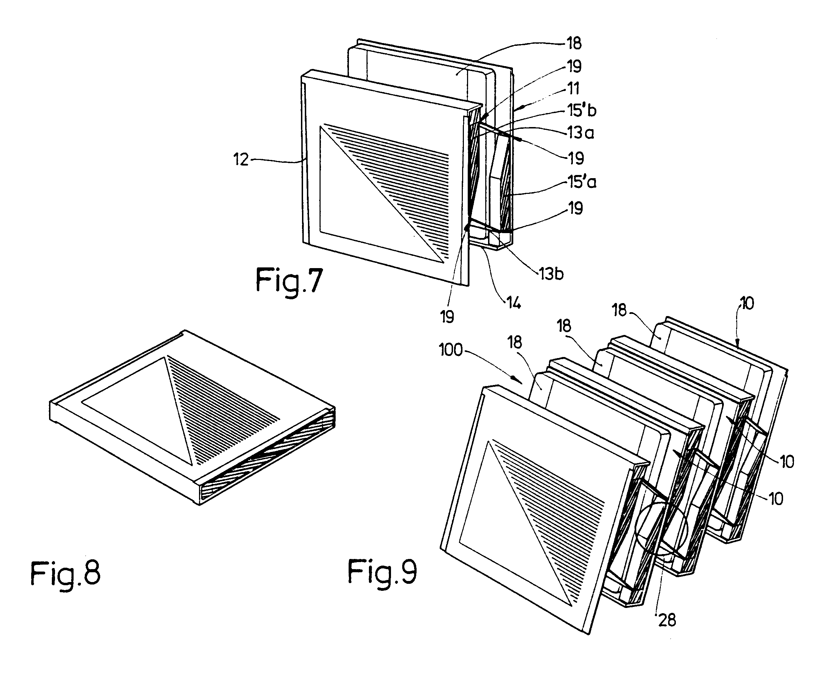

Zum besseren Verständnis der Öffnungs- und Schließkinematik jedes Einzelbehälters 10 im Sinne einer doppelten Parallelogrammführung wird auch auf die perspektivischen Darstellungen der Fig. 7, 8 und 9 verwiesen, wobei insbesondere die Fig. 7 deutlich zeigt, daß der jeweilige Seitenwandanteil 15a, 15a′; 15b, 15b′ von Rückwandteil bzw. Vorderwandteil auch eine gewisse Dicke aufweist und nach innen seitliche Führungen für die im geöffneten Zustand in den Rückwandteil 11 eingesetzte Kassette 18 bildet, wobei die Kassette 18 nach unten beim Einführen dann an die untere, umgebogene Randkante oder die untere Seitenwand 14 des Rückwandteils 11 anschlägt.

Die beiden Verbindungsstege, nämlich oberer Verbindungssteg 13a und unterer Verbindungssteg 13b, jeweils beidseitig, können, wie das dargestellte Ausführungsbeispiel zeigt, von den jeweiligen seitlichen Seitenwandteilen 15a′, 15b′ ausgehende einstückige flache Bänder sein, die im Gelenkbereich, also jeweils bei 19 durch Filmscharniere einstückig an den Seitenwandteilen befestigt sind. Dabei umfaßt eine bevorzugte Ausführungsform die Ausbildung der Filmscharniere in der Weise, daß diese eine vorgegebene federnde Rückstellkraft in die geschlossene Position des Einzelbehälters aufweisen, so daß nach dem Öffnen jedes Einzelbehälters bzw. dem Auseinanderziehen der gesamten, aus entsprechend vielen Einzelbehältern zusammengesetzten Vielfach-Archivierungsbox dieser bzw. diese die Tendenz hat, sich wieder zu schließen bzw. zusammenzuziehen.

Diese Tendenz der Vorspannung der Verbindungsstege kann, falls vorhanden, unterstützend dazu dienen, die Schließposition jedes Einzelbehälters aufrechtzuerhalten, die in vorteilhafter Ausgestaltung der Erfindung auch dadurch gesichert wird, daß, wie Fig. 6 zeigt, die jeweiligen abgebogenen oberen und/oder unteren Randkanten mindestens an einer vorgegebenen Stelle etwa im Mittenbereich bei 20 (Fig. 1) eine nach unten vorspringende Verriegelungszunge 21 aufweisen, die in eine entsprechende Ausnehmung oder Absenkung des jeweiligen anderen Wandteils bei vollständigem Schließen jedes Behälters einschnappt und diesen unter Vorspannung in der geschlossenen Position hält, bis eine manuelle Öffnung erfolgt.

In diesem Zusammenhang kann es bei der Herstellung eines jeweiligen Einzelbehälters noch sinnvoll sein, wenn der Bewegungsmechanismus einschließlich zugeordneter Seitenwandteile, beispielsweise der Bereich also, der in Fig. 4 mit der Umrandung 22 gekennzeichnet ist, separat aus einem besonders für die Herstellung von Filmscharnieren geeigneten Kunststoff durch Spritzguß oder auf sonstige Weise hergestellt ist und dann mit den anderen, verbliebenen Teilen, die aus einem anderen beliebigen, auch transparenten Kunststoff bestehen können, auf geeignete Weise verbunden wird; diese getrennte Herstellung des für die Bewegungskinematik zuständigen Teils ist durch eine Trennung andeutende, mit 23 bezeichnete Querlinien bei den seitlichen Seitenwänden 15a, 15b, 15a′, 15b′ angedeutet. Die Verbindung mit den restlichen Teilen kann durch für sich gesehen bekannte Schnapp- und Arretierungsmechanismen erfolgen, auf die hier nicht weiter eingegangen zu werden braucht, aber auch durch einen Klebvorgang, durch Verschweißen u.dgl.

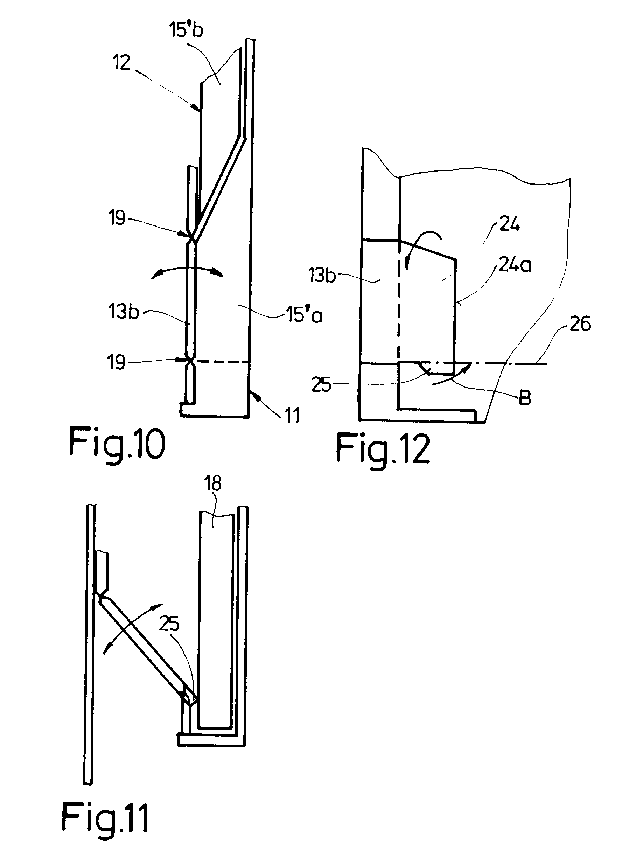

Damit im übrigen im geöffneten Zustand, so, wie er in Fig. 3 bzw. bei mehreren Einzelbehältern in Fig. 4 und entsprechend perspektivisch in den Figuren 7 und 9 dargestellt ist, ein Behälter 18, der eingesetzt wird, nicht einfach, etwa durch eine ungeschickte oder flüchtige Handhabung, zwischen Rückwandteil und Vorderwandteil hindurchfallen kann, weisen die seitlichen Seitenwände bzw. die an diesen befestigten oder in sie übergehenden Verbindungsstege 13a, 13b noch nach innen vorspringende Teile in Form von Zungen oder Arretiermittel auf, die in Fig. 12 mit 24 bezeichnet sind und im folgenden als Haltezungen bezeichnet werden. Diese Haltezungen 24 verlaufen also in Querrichtung zu den Verbindungsstegen 13a, 13b und bilden bei dem in den Figuren 10, 11 und 12 gezeigten Ausführungsbeispiel eine Quererstreckung zum unteren Verbindungssteg 13b.

An sich könnten diese Haltezungen 24 auch bis zur anderen Seitenwand und zu deren Haltesteg durchlaufend ausgebildet sein; bevorzugt ist aber eine Abbruchkante 24a gebildet, da beidseitig nach innen vorspringende Haltezungen 24, in Querrichtung von den unteren Verbindungsstegen 13b ausgehend, hinreichend im geöffneten Zustand die Vorderwand ersetzen, bis diese herangeklappt ist bei Überführung in den geschlossenen Zustand.

Die Fig. 10 zeigt in vergrößerter Darstellung einen Seitenwandausschnitt mit unterem Seitenwandteil 15a′ und an dieser über ein Filmgelenk 19 befestigt den unteren Verbindungssteg 13b, der über ein weiteres Filmscharnier 19 oben in die Befestigung am oberen Seitenwandteil 15b′ übergeht, welches in diesem Fall Teil des Vorderwandteils 12 ist.

Senkrecht zur Zeichenebene erstreckt sich dann die Haltezunge 24, vorzugsweise einstückig ausgehend vom Verbindungssteg 13b und man erkennt, daß im geschlossenen Zustand diese Haltezunge 24 bündig an der Innenfläche der Vorderwand anliegt, während im geöffneten Zustand, wie in Fig. 11 gezeigt, von der Haltezunge 24 eine sich verjüngende Schachtöffnung gebildet wird, die eine nach unten fallende Kassette 18 notwendigerweise bis zur unteren Anlage an die untere End- oder Seitenwand 14 und in Anlage zur Rückwand leitet.

Damit schließlich ferner beim Öffnen einer solchen Einzelkassette bzw. beim Öffnen der Einzelkassette im Verbund der Vielfach-Archivierungsbox die Kassetten 18 nicht der Öffnungsbewegung oder der sich vom Hinterwandteil entfernenden Vorderwand folgen, sich insofern querstellen und unter Umständen innen an die oben abgebogene obere Seitenwand anstoßen und in dieser Querposition ein weiteres Öffnen verhindern, sind an der Haltezunge 24 noch Arretiervorsprünge oder die Position der Kassette an der Rückwand fixierende Druckteile angeordnet, die im folgenden als Arretiervorsprünge 25 bezeichnet werden und sich über den unteren Gelenk- oder Scharnierpunkt 19 hinaus nach unten erstrecken, so daß sie sich um die durch den Gelenkpunkt 19 gebildete, imaginäre Achse, die in Fig. 2 mit 26 bezeichnet ist, beim Öffnen jedes Einzelbehälters nach innen, also gegen die eingelegte Kassette 18 drehen und gegen diese drücken, wie aus der Darstellung der Fig. 11 in Verbindung mit Fig. 12 leicht erkennbar ist. Dreht sich also die Haltezunge 24, jedenfalls im oberen Bereich der Fig. 12, beim Öffnen eines Einzelbehälters merklich nach außen, folgt also der sich entfernenden Vorderwandung, wobei sich bis zur Drehachse 26 eine allmähliche Schräglage ergibt, so dreht sich entsprechend dem Pfeil B der untere Arretiervorsprung 25 nach innen und hält so die Kassette 18 der Anlage an die Hinterwand, wodurch ein Verkippen derselben vermieden ist.

Es versteht sich, daß die dargestellten Einzelelemente im wesentlichen durch ihre Funktionen ihre erfinderische Bedeutung erfahren, weniger durch die Form, die bei einem Kunststoffmaterial, beispielsweise durch Spritzguß oder Formung hergestellt, auch anders strukturiert sein und verlaufen kann. Es liegen daher auch entsprechende Abänderungen und Formänderungen, sofern sie die im einzelnen geschilderten Funktionen erfüllen, innerhalb des erfindungsgemäßen Rahmens, wobei insbesondere Arretierbefestigungsmittel, Scharniermittel u. dgl. so geändert werden können, wie dies den jeweiligen Spritzgußansprüchen am besten entspricht.

Es versteht sich auch, daß je nach Erfordernis und Ansprüchen größere Teile insbesondere der flächigen Rück-und Vorderwände weggelassen, Öffnungen oder Verstärkungsrippen vorgesehen sein können, wie überhaupt die Form des Einzelbehälters natürlich in Abmessung, Größe und Tiefe der jeweiligen einzusetzenden Ware anzupassen ist, die eine CD-Platte mit oder ohne eigener Kassette, eine CD-ROM-Box o. dgl. sein kann.

Man erkennt ferner aus der Darstellung der Fig. 5, daß eine Vielzahl von möglichen Verbindungsarten der jeweiligen Einzelbehälter untereinander möglich ist. So können beispielsweise von außen U-förmige Verbindungsstifte 27 beidseitig an unterschiedlichen Höhen, jeweils zwei Kassetten überbrückend, eingesteckt werden, was bei dem dargestellten Ausführungsbeispiel, wie man am besten aus der Darstellung der Fig. 9 erkennt, im Bereich der durch die Umrandung 28 gebildeten schrägen Seitenwandflächen jeweils möglich ist.

Es ist aber auch möglich, durch entsprechende, aus einer der Wandflächen, auch an deren Randbereich vortretenden Vorsprünge und durch entsprechende Absenkungen Arretierungsmittel zu schaffen, so daß die einzelnen Behälter zusammengeklickt und eingeschnappt werden können, wodurch sich dann je nach Anzahl der verwendeten Einzelbehälter entsprechend aufgebaute Vielfach-Archivierungsboxen ergeben.

Eine weitere Ausführungsform zur Verbindung von Einzelkassetten aneinander kann durch eine schwalbenschwanzähnliche Struktur erfolgen, wie dies in Fig. 5 beidseitig durch 28 dargestellt ist; d.h. eine Fläche jedes Einzelbehälters weist, vorzugsweise im Randbereich einen schwalbenschwanzartigen Vorsprung auf, der in eine schwalbenschwanzartige Absenkung an der jeweils anderen Wandung des angrenzenden Einzelbehälters eingreift. Durch Aneinander-Entlangschieben der jeweiligen, die Schwalbenschwanzstrukturen tragenden Flächen bis in die Endposition ergibt sich auf diese Weise eine feste Arretierung und Verbindung von Einzelbehältern untereinander, wobei die Schwalbenschwanzstrukturen vorzugsweise leicht konisch, beispielsweise mit einer Neigung von lediglich nur 1° zulaufend ausgebildet sein können, so daß sich neben einer festen Verbindung eine sichere Selbsthemmung gegen unbeabsichtigtes Lösen ergibt.

Man erkennt am besten aus der Darstellung der Fig. 9, daß eine so gebildete Vielfach-Archivierungsbox mit dem Bezugszeichen 100 einen idealen, platzsparenden Aufbewahrungsort gerade für empfindliche Güter darstellt, wobei der jeweilige, zunächst die Verpackung des Einzelstücks bildende Behälter aufgrund seiner speziellen Struktur dazu geeignet ist, bei Einsatz zur Bildung einer Vielfach-Archivierungsbox dieser die vorteilhaften Eigenschaften zu verleihen, die sich auch bei dem anders beschaffenen mehrteiligen Aufnahmebehälter entsprechend dem weiter vorn schon erwähnten Gebrauchsmuster G 86 02 838.3 ergeben und dort ausführlich beschrieben sind.

Ein Auseinanderziehen der so gebildeten Vielfach-Archivierungsbox öffnet sämtliche Einzelbehälter in der Reihe, macht die eingelegten Kassetten zur optischen schnellen Inspektion sichtbar, erleichtert den Zugriff zu jeder der Kassetten und ermöglicht eine platzsparende Aufbewahrung, nachdem durch Schließen der Archivierungsbox deren Abmessungen drastisch verringert sind. Gleichzeitig ist sichergestellt, daß keiner der Einzelbehälter herumfliegt, verlorengeht oder durch unterschiedliches Stapeln in das System der Archivierung Unordnung gerät.

**Patentansprüche**

1. Zu einem mehrteiligen Aufnahmebehälter, insbesondere einer Vielfach-Archivierungsbox, zusammensetzbarer Einzelbehälter zur Aufnahme von plattenförmigen Gegenständen, beispielsweise Speichermittel in Form von Ton- oder Datenträgern (CD-Platten, Disketten, CD-ROM-Boxen) u. dgl., die gegebenenfalls noch in einem eigenen Schutzgehäuse (Kassette) untergebracht sind, dadurch gekennzeichnet, daß jeweils Vorderwandteil (12) und Rückwandteil (11) jedes Einzelbehälters (10) seitlich durch Verbindungsstege (13a, 13b) nach Art einer Parallelogrammführung auf beiden Seiten gelenkig miteinander verbunden sind, so daß durch Auseinanderziehen der jeweilige Einzelbehälter (10) geöffnet werden kann und daß an den nach außen gerichteten Flächen jeweils von Vorder- und Rückwand entsprechend zugeordnete Befestigungsmittel (27, 28) angeordnet sind, die die Verbindung jeweils einer äußeren Rückwandfläche mit der zugewandten Vorderwandfläche des nachfolgenden Einzelbehälters (10) oder umgekehrt ermöglichen.

2. Zu einem mehrteiligen Aufnahmebehälter zusammensetzbarer Einzelbehälter nach Anspruch 1, dadurch gekennzeichnet, daß der mehrteilige Aufnahmebehälter durch die parallelogrammartige Öffnungsstruktur jedes Einzelbehälters insgesamt ziehharmonikaartig zur Öffnung auseinandergezogen werden kann, wobei die einzelnen, plattenförmigen Gegenstände oder Kassetten (18) aufnehmenden Abteile über beidseitig angeordnete, obere und untere Verbindungsstege (13a, 13b) aneinander hängen.

3. Zu einem mehrteiligen Aufnahmebehälter zusammensetzbarer Einzelbehälter nach Anspruch 1 oder 2, dadurch gekennzeichnet, daß an dem Vorderwand- und/oder Rückwandteil (11, 12) mindestens teilweise die seitlichen Seitenwände (15a, 15b, 15a′, 15b′) angeordnet sind und daß an diesen Seitenwandteilen (15a, 15b; 15a′, 15b′) die Gelenkverbindungen zu den Verbindungsstegen (13a, 13b) befestigt sind, die nach Art einer Parallelogrammführung Vorderwandteil und Rückwandteil miteinander zur Durchführung einer Öffnungs- und einer Schließbewegung verbinden.

4. Zu einem mehrteiligen Aufnahmebehälter zusammensetzbarer Einzelbehälter nach einem der Ansprüche 1-3, dadurch gekennzeichnet, daß Vorderwandteil (12) und Rückwandteil (11) zueinander jeweils eine umgekehrte L-Form bilden und daher im einstückigen Übergang eine untere bzw. obere Seitenwand (14, 16) aufweisen.

5. Zu einem mehrteiligen Aufnahmebehälter zusammensetzbarer Einzelbehälter nach einem der Ansprüche 1-4, dadurch gekennzeichnet, daß die beiden seitlichen Seitenwände durch einen schrägen Übergang getrennt sind, einem unteren Teil (15a, 15a′), der jeweils vollständig an einem Wandteil (Hinterwandteil 11) und einen oberen Seitenwandteil (15b, 15b′), der jeweils vollständig an dem anderen Wandteil (Vorderwandteil 12)gegebenenfalls im einstückigen Übergang angeordnet sind, umfassen und daß in ingesamt spiegelbildlicher Ausbildung von den seitlichen Seitenwandteilen (15a, 15a′, 15b, 15b′) unter Bildung von Filmscharnieren als Gelenken die Verbindungsstege (13a, 13b) höhenversetzt ausgehen und zum jeweils anderen Teil übergehen.

6. Zu einem mehrteiligen Aufnahmebehälter zusammensetzbarer Einzelbehälter nach einem der Ansprüche 1-5, dadurch gekennzeichnet, daß die Verbindungsstege (13a, 13b) flache Bänder sind, die mit einer in Schließrichtung des jeweils Einzelbehälters wirkenden Vorspannungskraft an den jeweiligen Gelenkpunkten nach Art eines Filmscharniers einstückig angelenkt sind.

7. Zu einem mehrteiligen Aufnahmebehälter zusammensetzbarer Einzelbehälter nach einem der Ansprüche 1-6, dadurch gekennzeichnet, daß jeder Einzelbehälter (10) seine Schließposition verstärkende Arretier- und/oder Rastmittei (21) aufweist.

8. Zu einem mehrteiligen Aufnahmebehälter zusammensetzbarer Einzelbehälter nach Anspruch 7, dadurch gekennzeichnet, daß die in der geschiossenen Position jedes Einzelbehälters wirksamen Arretier- oder Rastmittel aus einem zungenförmigen Vorsprung (21) jeweils an der unteren oder oberen Seitenwand bestehen und aus einer Ausnehmung, in die der Vorsprung (21) eingreift bzw. hintergreift.

9. Zu einem mehrteiligen Aufnahmebehälter zusammensetzbarer Einzelbehälter nach einem der Ansprüche 1-8, dadurch gekennzeichnet, daß an dem nach oben offenen Wandteil (Hinterwandteil 11) nach innen gerichtete Leit- und Führungsmittel angeordnet sind, die eine eingeführte Kassette (18) schachtartig in ihre Endposition in Anlage an den Hinterwandteil leiten.

10. Zu einem mehrteiligen Aufnahmebehälter zusammensetzbarer Einzelbehälter nach Anspruch 9, dadurch gekennzeichnet, daß die Leit- und Führungsmittel von an den Verbindungsstegen (13a, 13b) angesetzten, sich in Querrichtung zu diesen nach innen erstreckenden Haltezungen (24) gebildet sind, die im geöffneten Zustand des Einzelbehälters eine schachtartige Führung für eine eingebrachte Kassette (18) bilden.

11. Zu einem mehrteiligen Aufnahmebehälter zusammensetzbarer Einzelbehälter nach einem der Ansprüche 1-10, dadurch gekennzeichnet, daß an den um den Drehpunkt der Verbindungsstegbewegung beim Öffnen des Einzelbehälters nach außen verschwenkenden Haltezungen (24) nach unten weisende Arretiervorsprünge (25) angeordnet sind, die zunehmend in Richtung auf die eingeführte Kassette (18) beim Öffnungsvorgang gedrückt werden und in Anlage an die Kassette (18) diese gegen ein Verkippen sicher in Anlage an die Hinterwandfläche halten.

12. Zu einem mehrteiligen Aufnahmebehälter zusammensetzbarer Einzelbehälter nach einem der Ansprüche 1-11, dadurch gekennzeichnet, daß die Befestigungsmittel zur Verbindung zweier Einzelbehälter an jedem Einzelbehälter von Seitenwandöffnungen zur Aufnahme von U-förmigen Verbindungsbrücken (27) gebildet sind.

13. Zu einem mehrteiligen Aufnahmebehälter zusammensetzbarer Einzelbehälter nach einem der Ansprüche 1-11, dadurch gekennzeichnet, daß die Befestigungsmittel Arretierbzw. Rastnasen an einer der Wandflächen und entsprechende Aufnahme-und Einsatzöffnungen oder Randkanten an der anderen, angrenzenden Fläche des nächsten Einzelbehälters sind derart, daß diese durch Aneinanderlegen und Einschnappen in die Form der Vielfach-Archivierungsbox gebracht werden können.

14. Zu einem mehrteiligen Aufnahmebehälter zusammensetzbarer Einzelbehälter nach einem der Ansprüche 1-11, dadurch gekennzeichnet, daß jeweils Vorder- und Rückwand jedes Einzelbehälters in komplementärer Ausbildung zueinander eine Schwalbenschwanzstruktur (Erhöhung oder Absenkung) aufweisen derart, daß durch ein Aufschieben der einzelnen Behälter bis zur bündigen Endposition diese zur Vielfach-Archivierungsbox miteinander verbunden sind.

15. Zu einem mehrteiligen Aufnahmebehälter zusammensetzbarer Einzelbehälter nach Anspruch 14, dadurch gekennzeichnet, daß die Schwalbenschwanzstruktur an Vorder- und Rückfläche jedes Einzelbehälters leicht konisch verläuft (Neigung ca. 1°) derart, daß beim Aufschieben in die Endposition Selbsthemmung auftritt.

**Claims**

1. A single container which can be assembled to form a multiple receiving container, in particular a multiple archiving box, and which is intended for receiving plate-shaped articles, for example storage means in the form of sound or data carriers (CD discs, floppy discs, CD-ROM boxes) and the like which are possibly still accommodated in their own protective housing (cassette), characterised in that a front wall part (12) and a rear wall part (11) of each single container (10) are each hinged to one another laterally by connecting webs (13a, 13b) in the manner of a parallelogram guide on both sides, so that the respective single container (10) can be opened by pulling apart and in that correspondingly assigned fastening means (27, 28) are arranged on the outward pointing surfaces of the front and rear wall respectively, each of these fastening means (27, 28) enabling one outer rear wall surface to be connected to the facing front wall surface of the following single container (10), or vice versa.

2. A single container according to Claim 1, which can be assembled to form a multiple receiving container, characterised in that, as a result of the parallelogram-type opening structure of each single container, the multiple receiving container can be pulled apart to open, on the whole in the manner of an accordion, the compartments receiving the individual plate-shaped articles or cassettes (18) being attached to one another via upper and lower connecting webs (13a, 13b) arranged on both sides.

3. A single container according to Claim 1 or 2, which can be assembled to form a multiple receiving container, characterised in that the lateral side walls (15a, 15b, 15a', 15b' ) are arranged at least partially on the front wall part and/or rear wall part (11, 12) and in that the hinge connections for the connecting webs (13a, 13b) are fastened to these side wall parts (15a, 15b; 15a', 15b' ), which connecting webs (13a, 13b) connect the front wall part and the rear wall part to one another in the manner of a parallelogram guide in order to carry out an opening and closing movement.

4. A single container according to any one of Claims 1-3, which can be assembled to form a multiple receiving container, characterised in that the front wall part (12) and the rear wall part (11) each form a reverse L-shape relative to one another and therefore have a lower and/or upper side wall (14, 16) in the one-piece crossover.

5. A single container according to any one of Claims 1-4, which can be assembled to form a multiple receiving container, characterised in that the two lateral side walls are separated by a diagonal crossover and comprise a lower part (15a, 15a' ), each arranged completely on one wall part (rear wall part 11), and an upper side wall part (15b, 15b'), each arranged completely on the other wall part (front wall part 12), where appropriate in the one-piece crossover, and in that, in a formation which is on the whole mirror-inverted, the connecting webs (13a, 13b) extend outwards from the lateral side wall parts (15a, 15a', 15b, 15b' ) in a vertically offset manner, forming film hinges as joints, and pass over to the respective other part.

6. A single container according to any one of Claims 1-5, which can be assembled to form a multiple receiving container, characterised in that the connecting webs (13a, 13b) are flat strips which, with a prestressing force acting in the closing direction of the respective single container, are hinged integrally at the respective hinge points in the manner of a film hinge.

7. A single container according to any one of Claims 1-6, which can be assembled to form a multiple receiving container, characterised in that each single container (10) has a stopping and/or catching means (21) reinforcing its closing position.

8. A single container according to Claim 7, which can be assembled to form a multiple receiving container, characterised in that the stopping or catching means, which are active in the closed position of each single container, consist of a tongue-shaped projection (21) on the respective lower or upper side wall and a recess into which or behind which the projection (21) engages.

9. A single container according to any one of Claims 1-8, which can be assembled to form a multiple receiving container, characterised in that, on the wall part (rear wall part 11) open towards the top, inward pointing leading and guiding means are provided which, in the manner of a shaft, lead an inserted cassette (18) into its final position where it rests against the rear wall part.

10. A single container according to Claim 9, which can be assembled to form a multiple receiving container, characterised in that the leading and guiding means are formed by holding tongues (24) which are fastened to the connecting webs (13a, 13b), extend inwards in the transverse direction to these and, in the opened state of the single container, form a shaft-like guide for an inserted cassette (18).

11. A single container according to any one of Claims 1-10, which can be assembled to form a multiple receiving container, characterised in that downward pointing stop projections (25) are arranged on the holding tongues (24), which swivel outwards around the centre of motion of the connecting webs when the single container is opened, these stop projections (25) increasingly being pressed in the direction of the inserted cassette (18) during the opening process and, having come to rest against the cassette (18), hold the latter securely so that it rests against the rear wall surface and is prevented from tipping.

12. A single container according to any one of Claims 1-11, which can be assembled to form a multiple receiving container, characterised in that the fastening means for the connection of two single containers to each single container are formed by side wall openings for receiving U-shaped connecting bridges (27).

13. A single container according to any one of Claims 1-11, which can be assembled to form a multiple receiving container, characterised in that the fastening means are stopping and/or catching lugs on one of the wall surfaces and corresponding receiving and insertion openings or edge rims on the other adjacent surface of the next single container, so that these can be brought into the shape of the multiple archiving box by placing them together or snapping them shut.

14. A single container according to any one of Claims 1-11, which can be assembled to form a multiple receiving container, characterised in that, in complementary formation to one another, the respective front and rear wall of each single container have a dovetail structure (elevation or depression) so that, by pushing on the individual containers to the flush final position, these are interconnected to form the multiple archiving box.

15. A single container according to Claim 14, which can be assembled to form a multiple receiving container, characterised in that the dovetail structure on the front and rear surface of each single container extends in a slightly conical manner (inclination of approx. 1°) so that automatic locking occurs when it is pushed into the final position.

**Revendications**

1. Boîtier individuel démontable pour un boîtier multiple de rangement, en particulier pour une boîte multiple d'archivage, pour ranger des objets en forme de disque, par exemple des moyens de stockage en forme de supports de son ou de données (disques compacts, disquettes, boîtes de disques compact ROM) et analogues, qui le cas échéant sont logés dans un étui de protection propre, boîtier individuel caractérisé en ce que la partie de paroi antérieure (12) et la partie de paroi postérieure (11) de chaque boîtier (10) sont reliées latéralement par des entretoises de liaison (13a, 13b) selon un type de guidage en parallélogramme les unes avec les autres de façon articulée, de telle sorte que par déplacement le boîtier correspondant (10) peut être ouvert et en ce que des moyens de fixation (27, 28) associés de façon correspondante sont disposés sur les faces orientées vers l'extérieur de la paroi antérieure et de la paroi postérieure, moyens qui permettent la liaison d'une face de paroi postérieure extérieure avec la face de paroi antérieure du boîtier individuel suivant (10) ou inversement.

**2.** Boîtier individuel démontable pour un boîtier multiple de rangement selon la revendication 1, caractérisé en ce que le boîtier multiple de rangement peut être déployé pour s'ouvrir grâce à la structure d'ouverture du type en parallélogramme de chaque boîtier individuel à la manière d'un accordéon, les compartiments individuels recevant les objets en forme de disque ou les cassettes (18), étant accrochés les uns aux autres au moyen d'entretoises de liaison (13a, 13b) disposées des deux côtés, supérieures et inférieures.

**3.** Boîtier individuel démontable pour un boîtier multiple de rangement selon la revendication 1 ou 2, caractérisé en ce que sur la partie de paroi antérieure et/ou de paroi postérieure (11, 12) sont disposées au moins partiellement les parois latérales (15a, 15b, 15a', 15b') et en ce que sur ces parties de parois latérales (15a, 15b ; 15a', 15b') sont fixées les liaisons articulées aux entretoises de liaison (13a, 13b), qui relient à la manière d'un guidage en parallélogramme la partie de paroi antérieure et la partie de paroi postérieure l'une de l'autre pour réaliser un mouvement d'ouverture et un mouvement de fermeture.

**4.** Boîtier individuel démontable pour un boîtier multiple de rangement selon l'une des revendications 1 a 3, caractérisé en ce que la partie de paroi antérieure (12) et la partie de paroi postérieure (11) présentent l'une par rapport à l'autre la forme d'un L inversé et en conséquence présentent dans le passage d'une seule pièce une paroi latérale inférieure ou supérieure (14, 16).

**5.** Boîtier individuel démontable pour un boîtier multiple de rangement selon l'une des revendications 1 à 4, caractérisé en ce que les parois latérales sont séparées par un passage oblique et comprennent une partie inférieure (15a, 15a') qui est disposée complètement sur une partie de paroi (partie de paroi postérieure 11) et une partie latérale de paroi (15b, 15b'), qui est disposée complètement sur l'autre partie de paroi (partie de paroi antérieure 12) le cas échéant dans le passage d'une seule pièce et en ce que dans une configuration au total symétrique les entretoises de liaison (13a, 13b) partent en étant décalées en hauteur des parties de parois latérales (15a, 15a', 15b, 15b') en formant des charnières en film servant d'articulation et passent à l'autre partie.

**6.** Boîtier individuel démontable pour un boîtier multiple de rangement selon l'une des revendications 1 à 5, caractérisé en ce que les entretoises de liaison (13a, 13b) sont des bandes plates, qui sont articulées d'une seule pièce à la manière d'une charnière en éventail avec une force de précontrainte agissant dans le sens de la fermeture du boîtier individuel correspondant sur les points d'articulation correspondants.

**7.** Boîtier individuel démontable pour un boîtier multiple de rangement selon l'une des revendications 1 à 6, caractérisé en ce que chaque boîtier individuel (10) présente son moyen de blocage et/ou d'encliquetage (21) renforçant sa position de fermeture.

**8.** Boîtier individuel démontable pour un boîtier multiple de rangement selon la revendication 7, caractérisé en ce que le moyen de blocage ou d'encliquetage agissant dans la position fermée de chaque boîtier consiste en une saillie en forme de languette sur la paroi latérale inférieure ou supérieure et en un évidement dans lequel la saillie (21) vient en prise ou s'accroche par derrière.

**9.** Boîtier individuel démontable pour un boîtier multiple de rangement selon l'une des revendications 1 à 8, caractérisé en ce que des moyens de direction et de guidage orientés vers l'intérieur sont disposés sur la partie de paroi ouverte vers le haut (partie de paroi postérieure 11), moyens qui amènent une cassette (18) introduite dans sa position finale en appui sur la partie de paroi postérieure à la manière d'un puits.

**10.** Boîtier individuel démontable pour un boîtier multiple de rangement selon la revendication 9, caractérisé en ce que les moyens d'amenée et de guidage sont formés par des languettes de fixation (24) attachées aux entretoises de liaison (13a, 13b), s'étendant dans le sens transversal par rapport à celles-ci vers l'intérieur, languettes qui forment un guidage à la manière d'un puits pour une cassette introduite (18) dans la position ouverte du boîtier individuel.

11. Boîtier individuel démontable pour un boîtier multiple de rangement selon l'une des revendications 1 à 10, caractérisé en ce que des saillies de blocage (25) tournées vers l'extérieur sont disposées sur les languettes de fixation (24) à faire basculer vers l'extérieur autour du point de pivotement du mouvement des entretoises de liaison lors de l'ouverture du boîtier individuel, saillies qui sont pressées en direction de la cassette (18) introduite lors du processus d'ouverture et en appui sur la cassette (18) maintiennent celle-ci contre un basculement de façon sûre en appui sur la face de paroi postérieure.

12. Boîtier individuel démontable pour un boîtier multiple de rangement selon l'une des revendications 1 à 11, caractérisé en ce que les moyens de fixation pour la liaison de deux boîtiers individuels sont formés sur chaque boîtier individuel par des ouvertures de paroi latérales pour recevoir des pièces des pièces (27) en forme d'U.

13. Boîtier individuel démontable pour un boîtier multiple de rangement selon l'une des revendications 1 à 11, caractérisé en ce que les moyens de fixation sont des nez de blocage ou d'encliquetage sur l'une des faces de paroi et des ouvertures de réception et de montage correspondantes ou des arêtes marginales sur l'autre face, adjacente du boîtier individuel voisin, de telle sorte que ces boîtiers peuvent être logés par rapprochement l'un contre l'autre et encliquetage dans la forme du boîtier multiple d'archivage.

14. Boîtier individuel démontable pour un boîtier multiple de rangement selon l'une des revendications 1 à 11, caractérisé en ce que respectivement la paroi antérieure et la paroi postérieure de chaque boîtier individuel présentent dans des configurations complémentaires l'une par rapport à l'autre une structure en queue d'aronde (relèvement ou rabaissement), de telle sorte que par un emboîtement des boîtiers jusqu'à leur position terminale affleurante, ceux-ci soient reliés l'un à l'autre pour former la boîte multiple d'archivage.

15. Boîtier individuel démontable pour un boîtier multiple de rangement selon la revendication 14, caractérisé en ce que la structure en queue d'aronde s'étend de façon légèrement conique (inclinaison d'environ 1°) sur la face antérieure et la face postérieure de chaque boîtier individuel, de telle façon que se produit un blocage automatique lors de l'enfoncement dans la position finale.

Fig.4

Fig.2

Fig.1

Fig.3

Fig.6

Fig.5

EP 0 301 417 B1

Fig.7

Fig.8

Fig.9

EP 0 301 417 B1

Fig.10

Fig.12

Fig.11